# EUROPEAN PATENT SPECIFICATION

(11) **EP 1 114 277 B1**
(45) Date of publication and mention of the grant of the patent: **28.05.2003**
(21) Application number: 99943087.9
(22) Date of filing: 01.09.1999
(51) Int. Cl.: F21V 8/00

(54) **EDGE-LIT ILLUMINATION SYSTEM**
KANTENBELEUCHTUNGSSYSTEM
SYSTEME D'ECLAIRAGE PAR LA TRANCHE

(30) Priority: 04.09.1998 GB 9819196
(43) Date of publication of application: 11.07.2001
(73) Proprietor: Lucite International UK Limited, Southampton, Hampshire SO14 3BP (GB)
(72) Inventor: FORSTER, John, Henry, Guisborough, Cleveland TS14 7LH (GB); ALLINSON, Heather, Darlington DL3 8JW (GB)
(74) Representative: Walsh, David Patrick
(86) International application number: GB9902880
(87) International publication number: WO00014448

(56) References cited:
- EP-A- 0 457 009
- WO-A-92/05535
- JP-A- 8 075 928

## Description

The present invention relates to an edge-lit illumination system

Edge-lit illumination systems which have as a basic feature a light source positioned alongside an edge of a light transmitting sheet are well known. The state of the art is typified by the light transmitting sheet being treated on at least one of its surfaces such that the light entering the edge of this sheet is irregularly reflected or scattered. Therefore this light is spread evenly across the illuminated surface. One of the ways of treating the surface is by application of a matrix of light reflecting and scattering material either directly to the surface or to a transparent film which is then adhered to the surface as disclosed in EP- A- 0549679. In this application the light transmitting sheet is treated on both of its surfaces. The light reflecting material is in the form of dots. These dots may be etched, painted or screen printed directly on to the surface of the light transmitting sheet or that of the transparent film adhered to the surface. The density of these dots may be increased in the direction away from the edge at which the light source is fixed by increasing the number of dots per unit area and decreasing the gaps between them or by keeping the gaps between the dots the same and increasing the size of the dots.

One disadvantage of the above system is that if this dot pattern across the light transmitting sheet is disturbed or disrupted in some way then correspondingly visually the illumination of the system appears to be disturbed. For example if asection of the dot pattern is abraded or stained then the illumination may appear to be disrupted corresponding to where the abrasion or staining has occurred on the surface of the fight transmitting sheet.

A further disadvantage of the above system is a feature of the light transmitting sheet being treated on both of its surfaces. Therefore there may be complete overlap of some of the dots on the upper surface of the sheet with some on the lower surface of the sheet. This causes fringing patterns which are apparent to an observer of such an edge-lit illuminated sign as slight dark patches on the surface of the sign. By fringing we mean bands, rings or other patterns of alternate light or dark.

It is an object of the present invention to provide an edge-lit illumination system which overcomes some of these problems.

Accordingly the present invention provides an edge-lit illumination system comprising a light transmitting sheet and a light source; the light source being positioned in proximity to and adjacent to an edge of said light transmitting sheet, characterised in that at least one of the two opposing surfaces of said light transmitting sheet carries markings such that said markings are disposed randomly within each of at least one nominal area of said at least one surface.

The light transmitting sheet is a transparent material. It may be glass or plastic but is preferably plastic and more specifically a clear acrylic sheet. The sheet may be of any shape, for example round, square, rectangular, triangular, cylindrical, irregular. Preferably it is rectangular.

Many types of light source are available but preferably fluorescent tubing is used. The diameter of the fluorescent tube may vary from typically 6mm, commonly referred to as T2, to 25mm, T8. The distance from the edge of the light transmitting panel to the crest of the tube is preferably between 1 and 2mm. In an alternative embodiment the fluorescent tube is an aperture tube. This type of tube has coated on the inside wall of the glass a reflective coating with a fluorescent coating on top of it. The aperture is a part of this tube, for example 30° of the 360° around the inside of the tube, with no coating. This opening runs the length of the tube and is arranged so it is directing light from the light source at the edge of the light transmitting sheet. A reflector is typically positioned behind each fluorescent tube and may be any material capable of reflecting. light, for example mirrored aluminium. Preferably the light transmitting sheet is in a fixed relationship to the light source.

The surface of at least one side of the light transmitting sheet may comprise a single nominal area or it may be comprised of a plurality of nominal areas. The single nominal area or the plurality of nominal areas may cover part of the surface of the light transmitting sheet or the total area of the surface of the sheet. Each of these nominal areas may be of an equal size or alternatively they may be of different sizes. For example, where the light transmitting sheet is rectangular, the length of each nominal: area may be approximately equal to the length of the edge of the sheet adjacent the light source and the width of each nominal area may be the same or a varied distance along the length of the light transmitting sheet, moving away from the light source.

Each of the nominal areas has markings which are disposed randomly within it. The markings may be of any shape, for example square, round, rectangular, triangular or irregular, or a combination of different shapes. Preferably they are of an irregular shape, for example irregularly shaped generally elongated structures based on squares and/or rectangles. The markings may be of equal size or a variety of sizes preferably ranging from 0.1mm to 10mm in length, more preferably 0.3 to 3mm. Preferably the width of the markings ranges from 0.5 to 1mm. The markings can be translucent or opaque and are preferably light coloured. By translucent we mean capable of transmitting rays of light with diffusion also. By opaque we mean substantially incapable of transmitting light but with the ability to scatter light.

These markings may be etched, painted or screen printed directly on to the surface of the light transmitting sheet or to that of a transparent film which is itself then adhered to the surface. Preferably the markings are screen printed directly on to the surface of the light transmitting sheet. An example of ink screen printing is stochastic screen printing. One simple way of defining stochastic screen printing is to compare it with the screen printing of the regular dot matrix, for example as illustrated in Figure 1 in EP- A-0549679. For a chosen nominal area of the regular dot matrix there is an associated coverage of ink on the light transmitting sheet. For the stochastic screen printing each dot in this ink coverage is broken down, using a computer programme, into many smaller random markings (these smaller markings are the markings of the present application). These smaller markings are randomly distributed in a pattern in the designated nominal area. They may be of equal size or a variety of sizes. This is as disclosed in Screen Process, July 1995, page 14 by J Mulvey.

The area of coverage of the markings, for example as ink coverage if treatment of the surface is by ink screen printing, is preferably 0.1 to 99%, more preferably 1 to 40% and especially 5 to 30% for the random markings within each nominal area. The area of coverage of the markings on the surface of the light transmitting sheet may remain the same for each nominal area across the sheet . For example a sheet may have a number of nominal areas, which may be of equal or a variety of sizes, each nominal area having 10% markings coverage. In a further embodiment the density of markings within each nominal area is increased in a direction away from the edge of the light transmitting sheet at which the light source is positioned. The density of markings can be increased by increasing the size of the markings and/or the number of markings for each nominal area in the direction away from the light source.

For example for an edge-lit system with a single light source there may be a number of nominal areas, each having a length approximately equal to the length of the edge of the sheet adjacent the light source and each having a width, which may be the same or a varied distance along the length of the light transmitting sheet, moving away from the light source. The first area has a markings coverage of 3% and the coverage gradually increases with each nominal area until the nominal area which is furthest away from the edge of the light transmitting sheet at which the light source is positioned has an area of markings coverage of 20%.

The overall illumination achieved may be similar or greater than that achieved when the dot matrix is regular, for example as illustrated in Figure 1 in EP- A- 0549679.

Edge-lit illumination systems described in the present invention can be used as lighting devices or light sources, for example for backlit displays and also may be modified for use as illuminated shelving, for example in refrigerators.

Specific embodiments of the invention will now be further described in the following examples and with reference to the accompanying Figures.
Figure 1 is a sectional view through an illuminated display system according to the invention.
Figure 2 is an embodiment of the random markings pattern on one surface of the light transmitting sheet.
Figure 3 is a plan view of an abraded illuminated light transmitting sheet, treated on both surfaces according to the invention.
Figure 4 is a plan view of an abraded illuminated light transmitting sheet treated on both surfaces for comparative purposes.

### Example 1

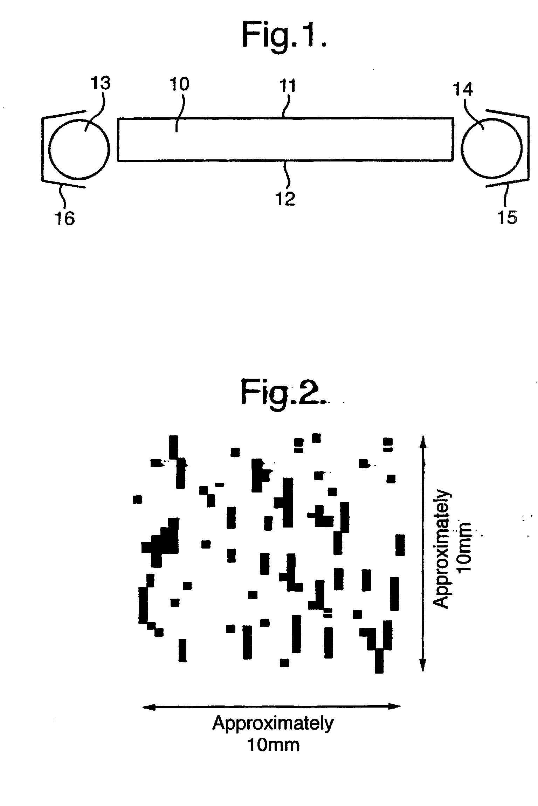

In Figure 1 the light transmitting sheet (10) is a 420 x 610 x 10mm clear cast polymethylmethacrylate (PMMA) which has been treated by screen printing white ink markings directly on to both its opposing surfaces (11,12). The markings are printed on to each surface as shown in Figure 2 and range from 0.3 to 3mm in length. The light sources are Sylvania Luxtine Plus Daylight Delux fluorescent tubes (13,14) which both have a power output of 18 Watts, a colour rendering value (Ra) of 86 ,a colour temperature of 6500 Kelvin and a diameter of 25mm. These are each placed adjacent to an edge of the light transmitting sheet and surrounded by a mirrored aluminium reflector (15,16).

### Example 2

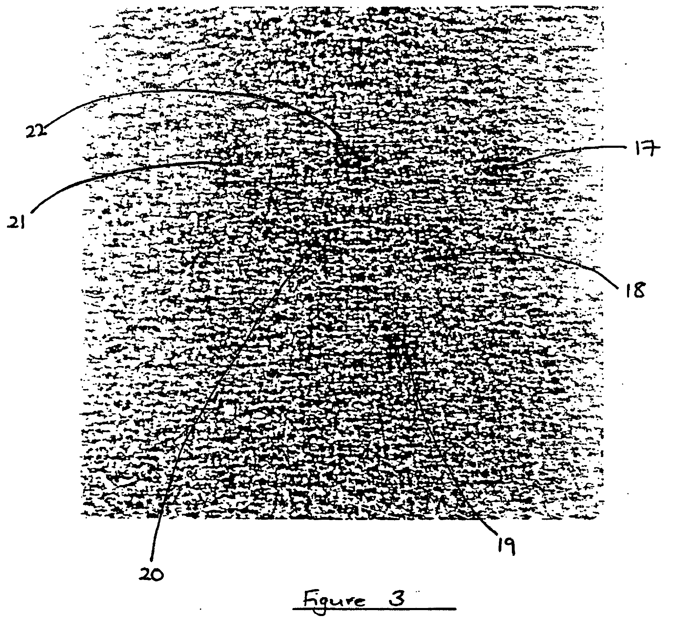

The treated light transmitting sheet of Example 1 has been abraded on its upper surface (11). The abrasion is in the form of 6 markings (17-22 inclusive) in a triangular configuration. Figure 3 illustrates the abraded illuminated sheet viewed from above the upper surface.

### Example 3 - Comparative

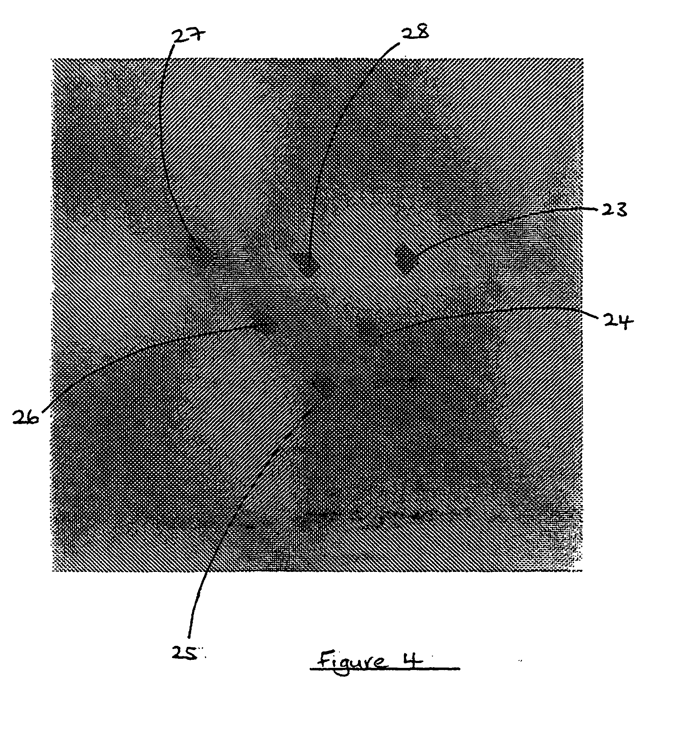

The light transmitting sheet of Example 1 has been replaced by a light transmitting sheet of the same dimensions treated by screen printing a regular matrix of white ink dots directly on to both its surfaces. The level of ink coverage ranges from about 3% increasing to 16% along the light path length of 210mm, away from each of two fluorescent tube light sources (13,14). (By light path length we mean for a single light source the furthest distance, along the length of the surface of one side of this sheet, through which light is emitted. For two light sources, adjacent to opposite edges of this sheet, then the light path length is half the distance between the two tubes.) The dots are circular and a regular distance apart, such that each nearest neighbour is 1.9mm away. The light transmitting sheet has been abraded as in Example 2. Figure 4 illustrates the abraded (23-28 inclusive) illuminated sheet viewed from above the upper surface.

It can be readily seen from Figures 3 and 4 that the visual disruption to illumination caused by the abrasion is much easier to identify in the comparative example in Figure 4. There is no evidence of the presence of any dark patches in Figure 3 which could be attributed to fringing patterns.

## Claims

1. An edge-lit illumination system comprising a light transmitting sheet (10) and a light source (13,14), the light source (13,14) being positioned in proximity to and adjacent to an edge of said light transmitting sheet (10), **characterised In that** at least one of the two opposing surfaces (11,12) of said light transmitting sheet (10) carries markings such that said markings are disposed randomly within each of at least one nominal area of said at least one surface, wherein the markings range from 0.1 to 10mm in length.

2. An edge-lit illumination system as claimed in claim 1 wherein both of the opposing surfaces of the light transmitting sheet carry markings.

3. An edge-lit illumination system as claimed in either of daim 1 or 2 wherein the area of markings coverage in each nominal area is between 0.1 to 99%.

4. An edge-lit illumination system as claimed in claim 3 wherein the area of markings coverage in each nominal area is between 1 to 40%.

5. An edge-lit illumination system as claimed in any of claims 1 to 4 wherein each nominal area is of an equal size.

6. An edge-lit illumination system as claimed in any of claims 1 to 4 wherein each nominal area is of a different size.

7. An edge-lit illumination system as claimed in any of claims 1 to 6 wherein the area of markings coverage is the same in each nominal area.

8. An edge-lit illumination system as claimed in any of claims 1 to 6 wherein the area of markings coverage is different in each nominal area.

9. An edge-lit illumination as claimed in any of claims 1-8 wherein the markings range from 0.3 to 3mm in length.

10. An edge-lit illumination system as ctaimed in any of claims 1 to 9 wherein the markings are of an irregular shape.

11. An edge-lit illumination system as claimed in any of claims 1 to 10 wherein the markings are screen printed directly on to the surface of the light transmitting sheet

## Patentansprüche

1. Kantenbeleuchtetes Lichtsystem mit einer lichtübertragenden Platte (10) und einer Lichtquelle (13, 14), wobei die Lichtquelle (13, 14) in der Nähe und angrenzend an eine Kante der lichtübertragenden Platte (10) positioniert ist,
**dadurch gekennzeichnet, dass**
mindestens eine der zwei gegenüberliegenden Oberflächen (11, 12) der lichtübertragenden Platte (10) Markierungen trägt, wobei die Markierungen willkürlich innerhalb jeder von mindestens einer Nennfläche der mindestens einen Oberfläche angeordnet sind, wobei die Markierungen von 0,1 bis 10 mm in der Länge reichen.

2. Kantenbeleuchtetes Lichtsystem nach Anspruch 1, wobei beide der gegenüberliegenden Oberflächen der lichtübertragenden Platte Markierungen tragen.

3. Kantenbeleuchtetes Lichtsystem nach Anspruch 1 oder 2, wobei die Fläche der Markierungsüberdeckung in jeder Nennfläche zwischen 0,1 bis 99 % beträgt.

4. Kantenbeleuchtetes Lichtsystem nach Anspruch 3, wobei die Fläche der Markierungsabdeckung in jeder Nennfläche zwischen 1 bis 40 % beträgt.

5. Kantenbeleuchtetes Lichtsystem nach einem der Ansprüche 1 bis 4, wobei jede Nennfläche von gleicher Größe ist.

6. Kantenbeleuchtetes Lichtsystem nach einem der Ansprüche 1 bis 4, wobei jede Nennfläche von unterschiedlicher Größe ist.

7. Kantenbeleuchtetes Lichtsystem nach einem der Ansprüche 1 bis 6, wobei die Fläche der Markierungsüberdeckung in jeder Nennfläche die Gleiche ist.

8. Kantenbeleuchtetes Lichtsystem nach einem der Ansprüche 1 bis 6, wobei die Fläche der Markierungsüberdeckung in jeder Nennfläche unterschiedlich ist.

9. Kantenbeleuchtetes Lichtsystem nach einem der Ansprüche 1 bis 8, wobei die Markierungen von 0,3 bis 3 mm in der Länge reichen.

10. Kantenbeleuchtetes Lichtsystem nach einem der Ansprüche 1 bis 9, wobei die Markierungen eine unregelmäßige Form haben.

11. Kantenbeleuchtetes Lichtsystem nach einem der Ansprüche 1 bis 10, wobei die Markierungen direkt auf die Oberfläche der lichtübertragenden Platte siebgedruckt sind.

## Revendications

1. Système d'éclairage par la tranche comprenant une feuille transmettant la lumière (10) et une source de lumière (13, 14) ; la source de lumière (13, 14) étant positionnée à proximité et de façon contiguë à une tranche de ladite feuille transmettant la lumière (10), **caractérisé en ce qu'**au moins l'une des deux faces opposées (11, 12) de ladite feuille transmettant la lumière (10) porte des marquages de telle sorte que lesdits marquages sont disposés aléatoirement à l'intérieur de chacune d'au moins une zone nominale de ladite au moins une surface, dans lequel les marquages ont une longueur allant de 0,1 à 10 mm.

2. Système d'éclairage par la tranche selon la revendication 1, dans lequel les deux surfaces en regard de la feuille transmettant la lumière portent des marquages.

3. Système d'éclairage par la tranche selon la revendication 1 ou 2, dans lequel la zone de couverture des marquages dans chaque zone nominale représente entre 0,1 et 99 %.

4. Système d'éclairage par la tranche selon la revendication 3, dans lequel la zone de couverture des marquages dans chaque zone nominale représente entre 1 et 40 %.

5. Système d'éclairage par la tranche selon l'une quelconque des revendications 1 à 4, dans lequel chaque zone nominale est de taille égale.

6. Système d'éclairage par la tranche selon l'une quelconque des revendications 1 à 4, dans lequel chaque zone nominale est de taille différente.

7. Système d'éclairage selon l'une quelconque des revendications 1 à 6, dans lequel la zone de couverture des marquages est la même dans chaque zone nominale.

8. Système d'éclairage par la tranche selon l'une quelconque des revendications 1 à 6, dans lequel la zone de couverture des marquages est différente dans chaque zone nominale.

9. Système d'éclairage par la tranche selon l'une quelconque des revendications 1-8, dans lequel les marquages ont une longueur allant de 0,3 à 3 mm.

10. Système d'éclairage par la tranche selon l'une quelconque des revendications 1 à 9, dans lequel les marquages sont de forme irrégulière.

11. Système d'éclairage par la tranche selon l'une quelconque des revendications 1 à 10, dans lequel les marquages sont imprimés par sérigraphie directement sur la surface de la feuille transmettant la lumière.
